# FASCICULE DE BREVET EUROPEEN

(11) **EP 1 347 875 B1**
(45) Date de publication et mention de la délivrance du brevet: **26.01.2005**
(21) Numéro de dépôt: 01988652.2
(22) Date de dépôt: 26.10.2001
(51) Int. Cl.: B29D 30/24

(54) **TAMBOUR D'ASSEMBLAGE POUR LA FABRICATION DE PNEUMATIQUES**
REIFENAUFBAUTROMMEL
TYRE BUILDING DRUM

(30) Priorité: 27.10.2000 FR 0013888
(43) Date de publication de la demande: 01.10.2003
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: RAVAT, Stéphane, F-63100 Clermont-Ferrand (FR)
(74) Mandataire: Bauvir, Jacques
(86) Numéro de dépôt international: PCT/EP2001/012453
(87) Numéro de publication internationale: WO 2002/034504

(56) Documents cités:
- EP-A- 0 953 434
- DE-B- 1 729 606
- US-A- 4 470 867

## Description

La présente invention concerne un tambour d'assemblage pour la fabrication de pneumatiques, expansible radialement.

L'invention concerne plus particulièrement la fabrication de pneumatiques comprenant une armature de carcasse. au moins une tringle de renforcement dans chacun des bourrelets du pneumatique à l'intérieur desquels l'armature de carcasse forme un retournement, et dont les deux bourrelets ont des diamètres différents. Cependant l'invention peut également s'appliquer à la fabrication de pneumatiques ne possédant pas de tringle mais dont les bourrelets ont des diamètres différents.

Il est clair que la réalisation de ce type de pneumatique impose l'utilisation d'un tambour d'assemblage présentant lui-même des sites de réception des bourrelets de pneumatiques de diamètre différent. Cependant cette inégalité de diamètre des sites de réception engendre des problèmes d'industrialisation et des insuffisances de qualité et de fiabilité des pneumatiques obtenus.

En effet, il est important pour la qualité et la fiabilité du pneumatique de poser sur le tambour les produits constitutifs de l'armature de carcasse, tels que des nappes etc..., de façon régulière à la fois en terme de géométrie, donc de centrage, et de tension dans les produits. Ceci paraît particulièrement difficile sur un tambour dans lequel les diamètres des sites de réception des bourrelets sont différents. Cependant, on peut imaginer que l'on réussit à pallier ces difficultés en posant les différents produits à la main avec lenteur et application. Il est clair que cette solution n'est pas adaptable au contexte industriel.

Par ailleurs. la réalisation du retournement de l'armature de carcasse dans les bourrelets du pneumatique nécessite une mise en tension de l'armature de carcasse au niveau des points autour desquels va s'effectuer la rotation de ladite armature, ce qui crée des difficultés supplémentaires.

La publication EP-0 953 434 décrit un tambour d'assemblage pour la fabrication de pneumatique ayant des bourrelets de diamètre différents. Ce tambour comporte à ses extrémités des gorges de réception des bourrelets, de diamètre différent et une virole escamotable destiné à venir recouvrir la gorge de plus faible diamètre pour présenter une surface cylindrique pour la pose des produits constitutifs de l'armature de carcasse. Des dispositifs de relevage situés à proximité des gorges permettent d'effectuer un retournement de l'armature de carcasse lorsque la virole est en position escamotée.

Ce tambour d'assemblage permet effectivement la réalisation de pneumatiques possédant des bourrelets de diamètre différent, cependant la présence de la virole nécessite des réglages précis pour assurer un bon centrage par rapport au tambour, augmente également l'encombrement notamment en longueur de ce dernier le rendant moins accessible et rend mécaniquement le tambour beaucoup plus complexe.

L'invention concerne donc un tambour d'assemblage plus simple permettant la fabrication de pneumatiques possédant des bourrelets de diamètre différent.

Selon l'invention, le tambour d'assemblage expansible radialement, ayant un corps monté sur un arbre central présentant une surface centrale généralement cylindrique de réception des produits à assembler et des extrémités de diamètres différents, comportant un dispositif de relevage situé à chaque extrémité du corps du tambour possédant une surface extérieure cylindrique de réception de produits à assembler, est caractérisé en ce que le dispositif de relevage disposé près de l'extrémité de plus faible diamètre est déplaçable radialement par rapport au corps du tambour entre une position où sa surface présente sensiblement le même diamètre que celui de la surface centrale du corps et une position où sa surface présente un diamètre inférieur à celui de la surface centrale du corps, le deplacement radial de ce dispositif de relevage étant synchronisé à l'expansion radiale du tambour.

Cette structure permet de réaliser une pose à plat des produits tels que l'armature de carcasse, c'est-à-dire sur une surface cylindrique, mais de réaliser un retournement des extrémités de l'armature de carcasse pour la réalisation de chaque bourrelet, en correspondance avec le diamètre de l'extrémité du tambour, le dispositif de relevage étant en quelque sorte ajustable à ce diamètre.

Selon une caractéristique de l'invention, le déplacement radial du dispositif de relevage déplaçable radialement est asservi à l'expansion radiale du tambour. Cet asservissement permet d'éviter d'avoir d'autres organes de commande de déplacement du dispositif de relevage à synchroniser avec le fonctionnement du tambour.

Avantageusement, le dispositif de relevage déplaçable radialement comprend une première surface d'appui destinée à coopérer avec une première butée portée par le tambour et fixe radialement par rapport à l'arbre central et une deuxième surface d'appui destinée à coopérer avec une deuxième butée portée par le corps et solidaire radialement de ce dernier, de sorte que chacune des deux positions radiales du dispositif par rapport au corps du tambour correspondent au contact d'une des deux butées avec la surface d'appui correspondante du dispositif. Cette configuration simple permet de réaliser l'asservissement souhaité.

D'autres caractéristiques et avantages de l'invention apparaîtront à la lecture d'un exemple de réalisation d'un tambour d'assemblage conforme à l'invention en référence au dessin annexé dans lequel :
- les figures 1A et 1B sont des coupes axiales du tambour conforme à l'invention respectivement en position rétractée du tambour et en position expansée de ce dernier,
- les figures 2A à 2E sont des représentations schématiques en coupe axiale partielle du tambour d'assemblage illustrant les différentes phases de la fabrication d'un pneumatique conformément à l'invention.

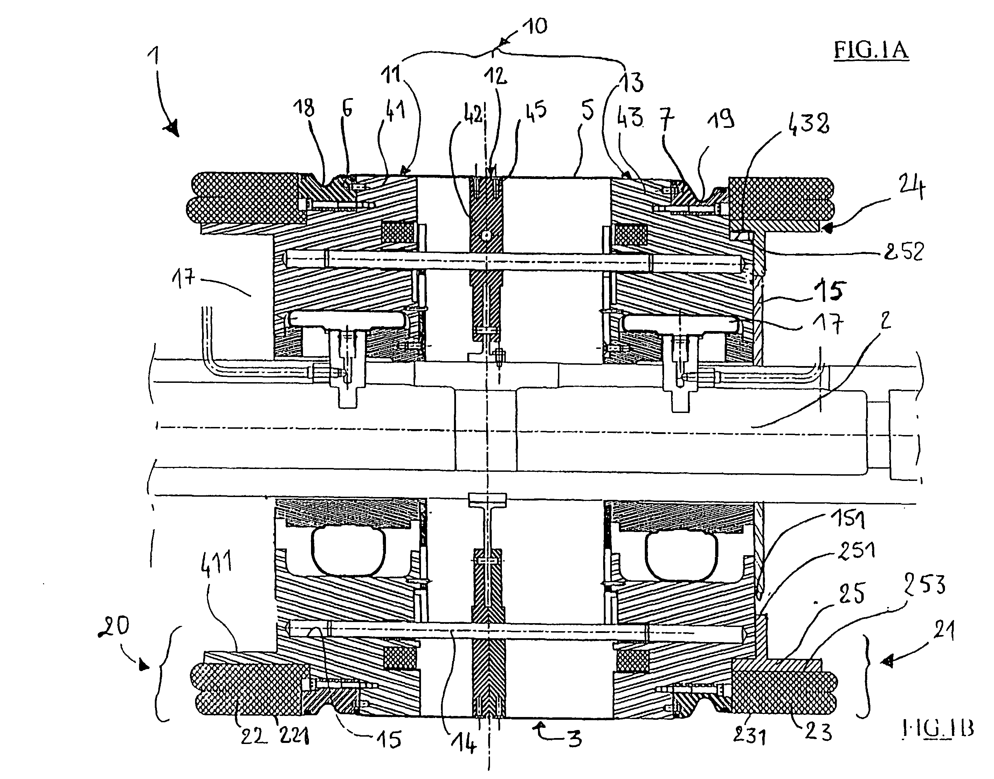

Selon les figures 1A et 1B, le tambour 1 d'assemblage, expansible radialement, comprend un corps 10 monté sur un arbre central 2 et présentant une surface 3 de réception des produits à assembler.

Le corps 10 comprend deux demi-cylindres 11 et 13 déplaçables axialement autour de l'arbre central 2 afin de régler l'écartement des tringles du pneumatique à réaliser, les deux demi-cylindres 11 et 13 étant séparés par une couronne centrale 12 fixe axialement par rapport à l'arbre central 2.

Les demi-cylindres 11 et 13 ainsi que la couronne 12 sont constitués par une pluralité de segments respectivement 41, 43 et 42 juxtaposés circonférentiellement autour de l'arbre central 2, les segments 41, 42 et 43 étant alignés. Pour assurer la coordination du corps 10, chacun des segments 41 et 43 est relié au segment 42 en vis-à-vis au moyen d'une tige 14 qui traverse le segment 42 et dont les extrémités sont montées coulissantes respectivement dans des alésages 15 portées par les segments 41 et 43.

Afin de permettre au tambour 1 d'atteindre sa position expansée, les segments 41, 42. 43 sont mobiles radialement sous l'action de deux chambres d'expansion 17 disposées respectivement sous lesdits segments 41 et 43, ces chambres étant gonflables. Les segments 41 et 43 entraînent dans leur mouvement radial les segments 42 de la couronne 12 par l'intermédiaire des tiges 14.

Des plaquettes 5 sont fixées par des vis 45non sur les segments 42 de la couronne 12. Ces plaquettes 5 recouvrent au moins partiellement les segments 41 et 43 afin d'assurer une continuité entre la couronne 12 et les demi-cylindres 11 et 13 pour les produits à assembler quelle que soit la position axiale des demi-cylindres. La couronne 12 permet, de plus, d'assurer un maintien axial des plaquettes 5 lors de l'expansion radiale du tambour 1.

Les segments 41 et 43 portent à leurs extrémités latérales orientées extérieurement au tambour 1, des éléments supports respectivement 6 et 7 portant des gorges de réception 18 et 19 des tringles du pneumatique. Ces gorges de réception 18 et 19 présentent des diamètres différents, la gorge 19 présentant le plus faible diamètre dans cet exemple, ce qui permet la réalisation d'un pneumatique asymétrique, c'est-à-dire dont les deux bourrelets ont des diamètres différents. On peut envisager indifféremment que les éléments supports 6 et 7 soient rapportés par rapport aux segments 41 et 43 ou que ces derniers fassent partie desdits segments.

Le tambour 1 porte à chacune de ces extrémités axiales un dispositif de relevage 20, 21 disposé axialement extérieurement par rapport au centre du tambour 1, respectivement à chaque gorge de réception 18, 19 à une faible distance de celles-ci ou juxtaposées à ces dernières, et présentant une surface d'appui 221 et 231 des produits à assembler.

La surface de réception 3 des produits à assembler est ainsi constituée par l'ensemble des surfaces extérieures des plaquettes 5 constituant la surface centrale du corps 10, des zones des segments 41 et 43 non recouvertes par lesdites plaquettes et des surfaces d'appui 221 et 231.

Le dispositif de relevage 20 disposé près de la gorge 18 de plus grand diamètre comprend des membranes de retroussage 22 qui sont portées directement par un prolongement axial 411 des segments 41. Le dispositif 20 est ainsi solidaire du tambour 1 lors de l'expansion radiale de ce dernier.

Le dispositif de relevage 21 comprend également des membranes de retroussage 23 mais ces dernières sont portées par un élément de support cylindrique 24 le support 24 étant constitué par une pluralité de segments 25 coopérant respectivement avec les segments 43.

Chaque segment 25 porte une première surface d'appui 251 destinée à coopérer avec une première butée portée par le tambour 1 fixe radialement par rapport à l'arbre central 2, et chaque segment 25 porte une deuxième surface d'appui 252 destinée à coopérer avec une deuxième butée portée par le segment 43 correspondant.

Selon la variante de réalisation de l'invention représentée sur les figures 1A et 1B, les segments 25 présentent une section axiale en T dont l'extrémité libre de la tige du T correspondant à l'extrémité libre de chaque segment 25, porte la première surface d'appui 251. La face de la barre axiale du T, radialement intérieure par rapport au centre du tambour, constitue la deuxième surface d'appui 252.

La face 253 de chaque segment 25, axialement extérieure par rapport au centre du tambour 1, correspondant à la barre axiale du T supporte les membranes de retroussage 23.

Les premières butées coopérant avec les premières surfaces d'appui 251 sont constituées par la ou les surfaces radialement extérieures 151 d'un élément 15 centré et fixé sur l'arbre central 2 de sorte qu'il soit solidaire de ce dernier. Cet élément 15 est accolé ou non aux extrémités axialement extérieures des segments 43.

Cet élément peut être réalisé sous forme d'un disque tel que représenté sur les figures ou sous toute autre forme permettant d'obtenir une surface extérieure susceptible de coopérer avec l'extrémité en T des segments 25 tels que, par exemple, des doigts répartis autour de l'arbre central 2, chaque doigt étant destiné à coopérer avec un segment 25.

La deuxième butée est constituée par un épaulement 432 porté par chaque segment 43. Il est clair même si cette variante n'est pas représentée sur les figures, que l'on peut prévoir un système de réglage de la butée 432.

Il est clair que pour une forme différente des segments 25, les butées correspondants aux surfaces d'appui auront également des dispositions différentes en restant respectivement solidaire de l'arbre central et de chaque segment 43.

Pour chaque segment 25, les surfaces d'appui sont réalisées de sorte que :
- en position rétractée du tambour 1, les chambres d'expansion 17 étant dégonflées : les surfaces 251 du segment 25 et 151 du disque 15 sont en contact,
- en position expansée du tambour 1, les chambres d'expansion 17 étant gonflées : la surface 252 du segment 25 et l'épaulement 432 du segment 43 sont en contact.

On réalise donc ici un asservissement du déplacement radial du dispositif de relevage 21 à l'expansion radiale du tambour, comme on le verra plus en détails dans la description du fonctionnement qui suit. On peut se contenter de synchroniser ces deux mouvements en réalisant une commande distincte du déplacement radial du dispositif de relevage 21 cependant cette solution est mécaniquement plus complexe.

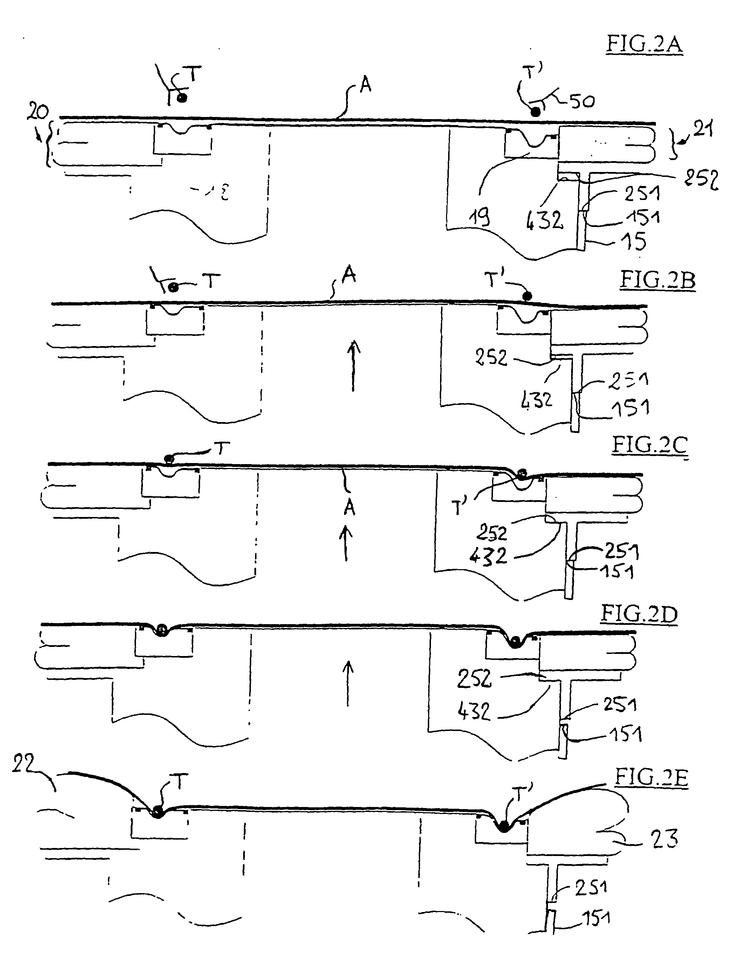

On décrit dans ce qui suit, en référence aux figures 2A à 2E, le procédé de fabrication d'un pneumatique comprenant une armature de carcasse A, deux bourrelets de diamètre différents comportant au moins une tringle de renforcement, respectivement T et T'. On ne s'intéressa ici qu'à la phase correspondant à la mise en place des tringles T et T', sans tenir compte du positionnement des autres produits constitutifs de la carcasse de pneumatique qui ne correspondent pas à l'objet de l'invention.

L'appareillage très schématisé sur les figures permettant la mise en oeuvre du procédé. comprend notamment le tambour 1 et des guide-tringles 50 déplaçables axialement, coaxialement à l'arbre central 2. Ces guide-tringles 50 comprennent respectivement un anneau de transfert d'une tringle grâce à des préhenseurs répartis sur sa circonférence assurant une tenue concentrique de la tringle par rapport au tambour 1.

Sur la figure 2A, le tambour 1 est représenté en position rétractée :
- les chambres d'expansion 17 sont dégonflées,
- ia surface 231 des membranes de retroussage 23 présente le même diamètre que celui correspondant à la surface centrale du corps 10,
- les surfaces 251 des segments 25 et 15 du disque 15 sont en contact alors que les surfaces 252 sont espacées radialement des épaulements 432.

Comme il apparaît sur cette même figure 2A. on a déposé l'armature de carcasse A sur cette surface 3 plane.

Les guide-tringles 50 portant les tringles T et T' sont alors avancés axialement vers l'armature de carcasse A jusque ce qu'ils atteignent leur position axiale par rapport au tambour 1, c'est-à-dire chacun au-dessus d'une des gorges 18, 19. Ces tringles T et T' sont amenées sans subir de contrainte particulière, par conséquent la distance radiale séparant chaque tringle du fond de la gorge correspondante est identique pour les deux tringles dans cet exemple.

On commence alors à gonfler les chambres d'expansion 17.

Lorsque la tringle T' de plus petit diamètre est au contact de l'armature de carcasse, on enlève le guide-tringle tenant la tringle T' tout en continuant de gonfler les chambres d'expansion 17 comme on le voit sur la figure 2B. On retire le guide-tringle tenant la tringle T de plus grand diamètre de la même façon lorsque celle-ci est en contact avec l'armature de carcasse A.
On observe que si les surfaces 251 et 151 sont toujours en contact, la distance séparant la surface 252 de l'épaulement 432 a diminué.

La figure 2C montre le tambour 1 partiellement expansé, les surfaces 252 entrent en contact avec les épaulements 432, les surfaces 251 et 151 étant encore en contact. Le dispositif de relevage 21 qui était jusqu'à ce stade, resté fixe radialement, se solidarise à présent du tambour 1 dans son expansion radiale.

La figure 2D illustre la fin du gonflage des chambres d'expansion 17, le tambour 1 a atteint sa position expansée, les deux tringles sont disposées chacune dans sa gorge. Les surfaces 252 sont toujours en contact avec les épaulements 432 par contre les surfaces 251 et 151 se sont écartés radialement les unes des autres.

Comme le montre la figure 2E, on procède ensuite au gonflement des membranes de retroussage 22 et 23 qui vont permettre un retournement des extrémités de l'armature de carcasse A avec une rotation de cette dernière autour des tringles T et T' et des autres produits, non représentés ici, constituant chaque bourrelet.

Sans sortir du cadre de l'invention, on peut tout à fait envisager d'autres éléments que les chambres d'expansion afin de réaliser une expansion radiale du tambour, le fonctionnement des dispositifs de relevage n'étant pas lié au choix de chambres d'expansion.

On pose ensuite les autres produits constitutifs du pneumatique. L'invention ne concerne pas cette partie de la fabrication. De nombreuses méthodes sont disponibles à l'homme du métier; c'est pourquoi il est inutile d'aborder cet aspect de la fabrication dans le contexte de la présente invention. Notons cependant que, dans le cas d'un procédé de fabrication en deux temps, il faut prévoir des flasques de reprise de diamètres différents sur le second tambour dit de "finition".

On procède à la vulcanisation du pneumatique à l'aide d'un moule qui doit tenir compte de l'asymétrie du pneumatique.

## Revendications

1. Tambour d'assemblage (1) expansible radialement, pour la fabrication de pneumatique, ledit tambour ayant un corps monté sur un arbre central (2) présentant une surface centrale généralement cylindrique de réception des produits à assembler et des extrémités de diamètres différents, le tambour comportant un dispositif de relevage (20, 21) situé à chaque extrémité du corps du tambour possédant une surface extérieure cylindrique (221, 231) de réception de produits à assembler, **caractérisé en ce que** le dispositif de relevage (21) disposé près de l'extrémité de plus faible diamètre est déplaçable radialement par rapport au corps (10) du tambour (1) entre une position où sa surface (231) présente sensiblement le même diamètre que celui de la surface centrale du corps (10) et une position où sa surface (231) présente un diamètre inférieur à celui de la surface centrale du corps (10), le déplacement radial de ce dispositif de relevage (21) étant synchronisé à l'expansion radiale du tambour (1).

2. Tambour selon la revendication 1, dans lequel le déplacement radial du dispositif de relevage (21) déplaçable radialement est asservi à l'expansion radiale du tambour (1).

3. Tambour selon l'une quelconque des revendications 1 ou 2, dans lequel le dispositif de relevage (21) déplaçable radialement comprend au moins une première surface d'appui (251) destinée à coopérer avec une première butée (151) portée par le tambour (1) et fixe radialement par rapport à l'arbre central (2) et au moins une deuxième surface d'appui (252) destinée à coopérer avec une deuxième butée (432) portée par le corps (10) et solidaire radialement de ce dernier, de sorte que chacune des deux positions radiales du dispositif (21) par rapport au corps du tambour correspondent au contact d'une des deux butées avec la surface d'appui du dispositif correspondante.

4. Tambour selon la revendication 3, dans lequel la deuxième butée (432) portée par le tambour est réglable.

5. Tambour selon l'une quelconque des revendications 3 ou 4, dans lequel la première butée (151) est portée par un élément centré et fixé radialement sur l'arbre central (2).

6. Tambour selon la revendication 5, dans lequel l'élément est constitué par un disque (15) dont la surface extérieure constitue la première butée (151).

7. Tambour selon la revendication 5, dans lequel l'élément est constitué par une pluralité de doigts répartis autour de l'arbre central, la surface extérieure radialement par rapport au centre du tambour de chaque doigt constitue une première butée.

8. Tambour selon l'une quelconque des revendications 1 à 7, dans lequel le dispositif de relevage (21) déplaçable radialement par rapport au corps (10) comprend des membranes de retroussage (23) montées fixement sur un support cylindrique (24) expansible radialement portant les première et deuxième surfaces d'appui (251, 252).

9. Tambour selon la revendication 8. dans lequel le support cylindrique (24) est constitué par une pluralité de segments (25) répartis radialement autour de l'arbre central.

10. Tambour selon la revendication 9, dans lequel chaque segment (25) porte les premières et deuxièmes surfaces d'appui (251, 252).

11. Tambour selon la revendication 10, dans lequel les segments (25) constituant le support cylindrique (24) ont une section en T.

## Claims

1. A radially expandable assembly drum (1) for the manufacture of tyres, said drum having a body mounted on a central shaft (2) having a generally cylindrical central surface for receiving the products to be assembled and ends of different diameters, the drum comprising a lifting device (20, 21) located at each end of the body of the drum having a cylindrical outer receiving surface (221, 231) for products to be assembled, **characterised in that** the lifting device (21) arranged close to the end of lesser diameter is radially displaceable relative to the body (10) of the drum (1) between a position in which its surface (231) has substantially the same diameter as that of the central surface of the body (10) and a position in which its surface (231) has a diameter less than that of the central surface of the body (10), the radial displacement of this lifting device (21) being synchronised with the radial expansion of the drum (1).

2. A drum according to Claim 1, in which the radial displacement of the radially displaceable lifting device (21) is automatically controlled by the radial expansion of the drum (1).

3. A drum according to any one of Claims 1 or 2, in which the radially displaceable lifting device (21) comprises at least one first bearing surface (251) intended to cooperate with a first stop (151) borne by the drum (1) and fixed radially relative to the central shaft (2), and at least one second bearing surface (252) intended to cooperate with a second stop (432) borne by the body (10) and integral radially with the latter, such that each of the two radial positions of the device (21) relative to the body of the drum corresponds to the contact of one of the two stops with the corresponding bearing surface of the device.

4. A drum according to Claim 3, in which the second stop (432) borne by the drum is adjustable.

5. A drum according to any one of Claims 3 or 4, in which the first stop (151) is borne by an element centred and fixed radially to the central shaft (2).

6. A drum according to Claim 5, in which the element is formed by a disc (15), the outer surface of which constitutes the first stop (151).

7. A drum according to Claim 5, in which the element is formed by a plurality of fingers distributed around the central shaft, and the radially outer surface relative to the centre of the drum of each finger constitutes a first stop.

8. A drum according to any one of Claims 1 to 7, in which the lifting device (21) which is radially displaceable relative to the body (10) comprises tum-up bladders (23) mounted fixedly on a radially expandable cylindrical support (24) bearing the first and second bearing surfaces (251,252).

9. A drum according to Claim 8, in which the cylindrical support (24) is formed by a plurality of segments (25) distributed radially around the central shaft.

10. A drum according to Claim 9, in which each segment (25) bears the first and second bearing surfaces (251, 252).

11. A drum according to Claim 10, in which the segments (25) constituting the cylindrical support (24) have a T-shaped section.

## Patentansprüche

1. Aufbautrommel (1) für die Herstellung eines Luftreifens, die in radialer Richtung vergrößerbar ist, wobei die Trommel einen auf einer Mittelachse (2) montierten Körper aufweist, welcher eine im Allgemeinen zylindrische zentrale Aufnahmefläche für die zusammenzufügenden Produkte und äußere Enden mit unterschiedlichen Durchmessern aufweist, wobei die Trommel eine Hebevorrichtung (20, 21) umfasst, die sich an jedem Ende des Trommelkörpers befindet und eine zylindrische äußere Fläche (221, 231) zur Aufnahme der zusammenzufügenden Produkte aufweist, **dadurch gekennzeichnet, dass** die Hebevorrichtung (21), die in der Nähe des Endes mit dem kleineren Durchmesser angeordnet ist, in Bezug auf den Körper (10) der Trommel (1) zwischen einer Position, in der ihre Oberfläche (231) in etwa den gleichen Durchmesser wie die zentrale Oberfläche des Körpers (10) aufweist, und einer Position, in der ihre Oberfläche (231) einen Durchmesser besitzt, der kleiner ist als der Durchmesser der zentralen Oberfläche des Körpers (10), in radialer Richtung verfahren werden kann, wobei die radiale Verschiebung der Hebevorrichtung (21) mit der radialen Expansion der Trommel (1) synchronisiert ist.

2. Trommel nach Anspruch 1, wobei die radiale Verschiebung der Hebevorrichtung (21), die in radialer Richtung verfahren werden kann, an die radiale Expansion der Trommel (1) gekoppelt ist.

3. Trommel nach einem der Ansprüche 1 oder 2, wobei die Hebevorrichtung (21), die in radialer Richtung verfahrbar ist, mindestens eine erste Auflagefläche (251), die dazu vorgesehen ist, mit einem ersten Anschlag (151) zusammenzuwirken, der sich an der Trommel (1) befindet und in Bezug auf die Mittelachse (2) in radialer Richtung ortsfest ist, und mindestens eine zweite Auflagefläche (252) aufweist, die dazu vorgesehen ist, mit einem zweiten Anschlag (432) zusammenzuwirken, die sich an dem Körper (10) befindet und radial fest mit diesem verbunden ist, in einer Weise, dass beide radialen Positionen der Vorrichtung 21 bezogen auf den Trommelkörper dem Kontakt eines der beiden Anschläge mit der entsprechenden Auflagefläche der Vorrichtung entsprechen.

4. Trommel nach Anspruch 3, wobei der zweite Anschlag (432), der sich an der Trommel befindet, einstellbar ist.

5. Trommel nach einem der Ansprüche 3 oder 4, wobei der erste Anschlag (151) von einem radial an der Mittelachse (2) fixierten und zentrierten Element getragen wird.

6. Trommel nach Anspruch 5, wobei das Element aus einer Scheibe (15) besteht, deren äußere Oberfläche den ersten Anschlag (151) bildet.

7. Trommel nach Anspruch 5, wobei das Element aus mehreren Stiften besteht, die um die Mittelachse herum verteilt sind, wobei die in Bezug auf die Trommelmitte in radialer Richtung außen liegende Fläche jedes Stiftes einen ersten Anschlag bildet.

8. Trommel nach einem der Ansprüche 1 bis 7, wobei die Hebevorrichtung (21), die in Bezug auf den Körper (10) in radialer Richtung verfahrbar ist, Umbuckmembranen (23) umfasst, die fest auf einem zylindrischen Träger (24) montiert sind, der in radialer Richtung expandierbar ist und die erste und zweite Auflagefläche (251, 252) aufweist.

9. Trommel nach Anspruch 8, wobei der zylindrische Träger (24) aus mehreren Segmenten (25) besteht, die radial um die Mittelachse herum verteilt sind.

10. Trommel nach Anspruch 9, wobei jedes Element (25) die erste und zweite Auflagefläche (251, 252) aufweist.

11. Trommel nach Anspruch 10, wobei die Segmente (25), die den zylindrischen Träger (24) bilden, einen T-förmigen Querschnitt besitzen. EP 1 347 87
